# EUROPÄISCHE PATENTANMELDUNG

(11) **EP 4 113 672 A1**
(43) Veröffentlichungstag der Anmeldung: **04.01.2023**
(21) Anmeldenummer: 21182072.5
(22) Anmeldetag: 28.06.2021
(51) Int. Cl.: H01M 8/0273, H01M 8/0226, H01M 4/66, H01M 8/0221, H01M 8/0247, C25B 9/23, C25B 9/73, B29C 70/88, C25B 11/069

(54) **BIPOLARPLATTE ZUR CHEMISCHEN ABGRENZUNG UND ELEKTRISCHEN REIHENSCHALTUNG AUFEINANDER GESTAPELTER PEM-BRENNSTOFFZELLEN ODER PEM-ELEKTROLYSEURE**

(71) Anmelder: Eisenhuth GmbH & Co. KG, 37520 Osterode (DE)
(72) Erfinder: Hickmann, Dr. Thorsten, 37520 Osterode (DE)
(74) Vertreter: REHBERG HÜPPE + PARTNER

(57) **Zusammenfassung**

Eine Bipolarplatte (1) zur chemischen Abgrenzung und elektrischen Reihenschaltung aufeinander gestapelter PEM-Brennstoffzellen oder PEM-Elektrolyseure weist eine gasundurchlässige Sperrschicht (2), eine erste Flächenelektrode (6) in einem zentralen Bereich (5) auf einer ersten Seite (3) der Sperrschicht (2) und eine elektrische Verbindung zwischen der ersten Flächenelektrode (6) auf der ersten Seite (3) und einer gegenüberliegenden zweiten Seite (4) der Sperrschicht (2) auf. Die Sperrschicht (2) weist eine Kunststoffmatrix (9) auf. Die erste Flächenelektrode (6) ist offen porös und von einem Abdichtrand (8) der Bipolarplatte (1) umgeben. Die elektrische Verbindung weist in die Kunststoffmatrix (9) der Sperrschicht (2) eingebettete elektrisch leitfähige Partikel (10) auf. Die erste Flächenelektrode (6) weist eine erste Elektrodenmatrix aus Kunststoff auf, wobei eine elektrische Leitfähigkeit der ersten Flächenelektrode (6) auf in die erste Elektrodenmatrix (11) eingebetteten Metallpartikeln (13) basiert.

## Beschreibung

### TECHNISCHES GEBIET DER ERFINDUNG

Die Erfindung bezieht sich auf eine Bipolarplatte zur chemischen Abgrenzung und elektrischen Reihenschaltung aufeinander gestapelter PEM-Brennstoffzellen oder PEM-Elektrolyseure. Genauer bezieht sich die vorliegende Erfindung auf eine Bipolarplatte mit den Merkmalen des Oberbegriffs des unabhängigen Patentanspruchs 1. Weiterhin bezieht sich die vorliegende Erfindung auf einen PEM-Stapelreaktor mit einer solchen Bipolarplatte.

### STAND DER TECHNIK

Brennstoffzellen werden regelmäßig aufeinander gestapelt und dabei elektrisch in Reihe geschaltet, um die Zellenspannungen der einzelnen Brennstoffzellen zu addieren. Auch bei Elektrolyseuren, insbesondere Hydrolyseuren, in denen gegenüber einer Brennstoffzelle umgekehrte elektrochemische Reaktionen ablaufen, ist eine Stapelbauweise üblich. Einige Stapelreaktoren können sowohl als Brennstoffzellen als auch als Elektrolyseure Verwendung finden.

Bei PEM-Brennstoffzellen oder -Elektrolyseuren ist zwischen den ungleichnamigen Elektroden jeder Zelle eine Protonenaustauschmembran (PEM) angeordnet. Hieran schließen in der Regel auf beiden Seiten Gasdiffusionsschichten an, die aufgrund ihrer englischen Bezeichnung Gas Diffusion Layer auch als GDL bezeichnet werden. Auf mindestens einer Seite der Protonenaustauschmembran steht eine poröse Flächenelektrode in innigem mechanischem Kontakt mit der Gasdiffusionsschicht. Rückwärtig grenzt die poröse Flächenelektrode an eine Sperrschicht an. Auf der anderen Seite der PEM kann auch eine nichtporöse Flächenelektrode angeordnet sein. In jedem Fall ist diese Flächenelektrode in dem jeweiligen PEM-Stapelreaktor mit der zu ihr ungleichnamigen porösen Flächenelektrode der nächsten Zelle elektrisch leitend verbunden. Die elektrische Verbindung kann dadurch realisiert sein, dass die Sperrschicht zwischen den Flächenelektroden elektrisch leitend ist. Eine elektrisch leitfähige Sperrschicht kann eine nicht poröse Flächenelektrode ersetzen.

Als Material für Flächenelektroden in PEM-Brennstoffzellen und -Elektrolyseuren hat sich Titan bewährt, weil es den im Betrieb auftretenden elektrochemischen Beanspruchungen gut widersteht. Titan ist jedoch sowohl als solches teuer als auch in der Verarbeitung aufwändig.

Aus der DE 10 2012 111 229 A1 ist eine Bipolarplatte für einen PEM-Stapelreaktor bekannt, der mindestens zwei durch jeweils eine Bipolarplatte chemisch getrennte, aber elektrisch in Reihe geschaltete Elementarzellen mit zentralen Protonenaustauschmembranen aufweist. Die Bipolarplatte weist einen Randbereich und innerhalb des Randbereichs auf ihrer einen Seite einen ersten Zentralbereich und auf ihrer anderen Seite einen zweiten Zentralbereich auf. Die Bipolarplatte umfasst einen Formkörper aus Kunststoff, wobei in den beiden Zentralbereichen Strömungsfelder aus offenen Querströmungskanälen in den Formkörper eingeformt sind. In dem Randbereich sind die Bipolarplatte durchdringende Versorgungskanäle ausgebildet, die innerhalb des Formkörpers mit den Querströmungskanälen kommunizieren. Der Formkörper ist zwischen Schenkeln eines in Querschnitt durch den PEM-Stapelreaktor U-förmig gebogenen Elektrodenblechs angeordnet. Das Elektrodenblech weist in den Zentralbereichen Durchbrechungen auf. Auf beiden Seiten der Bipolarplatte ist eine in dem Randbereich um den jeweiligen Zentralbereich umlaufende Dichtung ausgebildet, die zwischen dem Elektrodenblech und dem Formkörper abdichtet. Das Elektrodenblech weist einen Kern aus Titanstreckmetall auf, der mit Platin oder einem, insbesondere iridiumhaltigen, Titanmischoxyd beschichtet ist. Jede Dichtung ist durch eine Elastomerdichtung ausgebildet, die an das Elektrodenblech angespritzt ist. Die bekannte Bipolarplatte ist von komplexem, mehrteiligem Aufbau und aufgrund der großen Menge an verarbeitetem Titan teuer.

Aus der DE 10 2012 024 753 A1 ist eine Bipolarplatte mit den Merkmalen des Oberbegriffs des unabhängigen Patentanspruchs 1 bekannt, die dort als Bauteil mit dem Namen "Rahmen-Platte" bezeichnet und so beschrieben ist, dass sie einen aus elektrisch isolierendem Material gefertigten Rahmen aufweist, der eine form- und kraftschlüssig integrierte, elektrisch leitfähige Bipolarplatte enthält. Die Bipolarplatte ist aus einem thermoplastisch verformbaren Kunststoff-Polymerverbundwerkstoff ausgebildet und in einer Form mit einem ebenfalls thermoplastischen Polymer derart umspritzt oder umpresst, dass eine form- und kraftschlüssige, zumindest aber flüssigkeitsdichte Verbindung des in der Form hergestellten Rahmens mit der Bipolarplatte entsteht. Das bekannte Bauteil ist zur Montage von elektrochemischen Reaktoren und besonders von Redox-Flow-Batterien vorgesehen.

### AUFGABE DER ERFINDUNG

Der Erfindung liegt die Aufgabe zugrunde, eine Bipolarplatte aufzuzeigen, die bei hoher Funktionalität kostengünstig herstellbar ist.

### LÖSUNG

Die Aufgabe der Erfindung wird durch eine Bipolarplatte mit den Merkmalen des unabhängigen Patentanspruchs 1 gelöst. Bevorzugte Ausführungsformen der erfindungsgemäßen Bipolarplatte sind in den abhängigen Patentansprüchen definiert. Patentanspruch 15 ist auf einen PEM-Stapelreaktor mit einer erfindungsgemäßen Bipolarplatte gerichtet.

### BESCHREIBUNG DER ERFINDUNG

Eine erfindungsgemäße Bipolarplatte dient zur chemischen Abgrenzung und elektrischen Reihenschaltung aufeinander gestapelter PEM-Brennstoffzellen oder PEM-Elektrolyseure, insbesondere in einem PEM-Stapelreaktor, der mindestens zwei durch jeweils eine Bipolarplatte chemisch getrennte, aber elektrisch in Reihe geschaltete Elementarzellen mit zentralen Protonenaustauschmembranen aufweist.

Die erfindungsgemäße Bipolarplatte weist eine gasundurchlässige Sperrschicht mit einer Kunststoffmatrix auf, auf der ihre Gasdurchlässigkeit beruht. Es versteht sich, dass eine auf einer Kunststoffbasis basierende Sperrschicht endlicher Dicke keine Gasdurchlässigkeit von null aufweist. Wenn hier von einer gasundurchlässigen Sperrschicht die Rede ist, ist damit gemeint, dass eine unvermeidbare Restgasdurchlässigkeit der Sperrschicht so gering ist, dass der Betrieb des jeweiligen PEM-Stapelreaktors nicht beeinträchtigt ist. Insbesondere dürfen aufgrund der Restgasdurchlässigkeit der Sperrschicht keine hochreaktiven Gasgemische wie Knallgas entstehen. Dies impliziert, dass die Sperrschicht auch für Wasserstoffgas im Wesentlichen gasundurchlässig ist und nur eine in der praktischen Verwendung irrelevante Restgasdurchlässigkeit aufweist.

Die erfindungsgemäße Bipolarplatte weist weiterhin eine erste Flächenelektrode in einem zentralen Bereich auf einer ersten Seite der Sperrschicht auf, wobei die erste Flächenelektrode offen porös ist und von einem Abdichtrand der Bipolarplatte umgeben ist. Dieser Abdichtrand der Bipolarplatte schließt gasdicht, d. h. im obigen Sinne gasundurchlässig, an die Sperrschicht an. Dass die erste Flächenelektrode innerhalb des Abdichtrands angeordnet ist, bedeutet zumindest, dass sie in einer Projektion normal zu der Haupterstreckungsebene der Bipolarplatte innerhalb dieses Abdichtrands liegt. Typischerweise liegt sie auch räumlich innerhalb des Abdichtrands. Wenn dies nicht der Fall ist, kann die erste Flächenelektrode zur räumlichen Anordnung innerhalb des Abdichtrands einer in dem PEM-Stapelreaktor benachbarten Bipolarplatte vorgesehen sein. Die erste Flächenelektrode ist in jedem Fall offen porös und zwar zumindest in Richtung normal zu der Haupterstreckungsebene der Bipolarplatte und damit zumindest in dieser Richtung fluiddurchlässig, d. h. zumindest gasdurchlässig, aber in der Regel auch für Flüssigkeiten permeabel. Die offene Porosität der ersten Flächenelektrode, d. h. der von ihren offenen Poren ausgefüllte Anteil ihres Volumens, beträgt typischerweise mindestens 5%, vorzugsweise mindestens 10% und noch mehr bevorzugt mindestens 20 %.

Bei der erfindungsgemäßen Bipolarplatte ist eine elektrische Verbindung zwischen der ersten Flächenelektrode auf der ersten Seite und einer gegenüberliegenden zweiten Seite der Sperrschicht, insbesondere einer dort angeordneten zweiten Flächenelektrode, vorhanden. Diese elektrische Verbindung weist in die Kunststoffmatrix der Sperrschicht eingebettete elektrisch leitfähige Partikel auf, d. h. sie basiert auf der elektrischen Leitfähigkeit der in die Kunststoffmatrix der Sperrschicht eingebetteten elektrisch leitfähigen Partikel.

Erfindungsgemäß weist die erste Flächenelektrode eine erste Elektrodenmatrix aus Kunststoff, d. h. ebenfalls eine Kunststoffmatrix auf, wobei eine elektrische Leitfähigkeit der ersten Flächenelektrode auf in die Elektrodenmatrix eingebetteten Metallpartikeln basiert. Diese in die Elektrodenmatrix eingebetteten Metallpartikel ersetzen bei der erfindungsgemäßen Bipolarplatte eine poröse oder offene Metallelektrode. Dies bedeutet, das in der erfindungsgemäßen Bipolarplatte grundsätzlich weniger Metall Verwendung findet. Zudem kann die erste Flächenelektrode mit der mit Metallpartikeln gefüllten Elektrodenmatrix in Kunststoffformtechnik ausgebildet werden. Eine aufwändige Metallverarbeitung ist nicht erforderlich.

Wenn davon die Rede ist, dass die Metallpartikel der Flächenelektrode in die Elektrodenmatrix eingebettet sind, so bedeutet dies nicht, dass alle Metallpartikel vollständig von der Elektrodenmatrix umschlossen sind. Ganz im Gegenteil liegen die Metallpartikel teilweise an der Oberfläche der Flächenelektrode frei, und viele Metallpartikel stehen innerhalb der Elektrodenmatrix, in die sie eingebettet sind, in mechanischem und damit auch in elektrischem Kontakt miteinander.

Die Metallpartikel, die in die erste Elektrodenmatrix eingebettet sind, können im Wesentlichen aus Titan bestehen. Auch einige Edelstähle sind unter den Betriebsbedingungen in einem PEM-Stapelreaktor ausreichend beständig, so dass die Metallpartikel alternativ im Wesentlichen aus solchen Edelstählen bestehen können. In jedem Fall können die Metallpartikel zum Beispiel mit Platin und/oder Ruthenium und/oder einem Titanmischoxyd und/oder einem Titannitrit beschichtet sein. Das Titanmischoxyd kann zum Beispiel iridiumhaltig sein. Jede Beschichtung kann durch Physical Vapor Deposition (PVD), d. h. physikalische Dampfablagerung ausgebildet sein.

Die Metallpartikel machen bei der erfindungsgemäßen Bipolarplatte typischerweise 65 Gewichtsprozent bis 85 Gewichtsprozent der Flächenelektrode aus. Vorzugsweise beträgt der Anteil der Metallpartikel an der Masse der Flächenelektrode 70 % bis 80 %, d. h. etwa 75 %. Die Untergrenze für den Anteil der Metallpartikel wird durch die zu erreichende elektrische Leitfähigkeit der Flächenelektrode gesetzt, die bezogen auf das massive Material der Flächenelektrode, d. h. ohne ihre Poren, in jeder Richtung und damit auch normal zu der Haupterstreckungsebene der Bipolarplatte mindestens 30 S/cm betragen sollte. Vorzugsweise beträgt die elektrische Leitfähigkeit bezogen auf das massive Material der Flächenelektrode normal zu der Haupterstreckungsebene der Bipolarplatte ("through plane") mindestens 40 S/cm und längs der Haupterstreckungsebene der Bipolarplatte ("in plane") mindestens 100 S/cm. Die Leitfähigkeit der porösen Flächenelektrode liegt abhängig von ihrer Porosität darunter, hält aber vorzugsweise ebenfalls mindestens die hier angegebenen Werte ein und kann je nach dem Metall und dem Masseanteil der Metallpartikel auch deutlich darüber liegen. Die Obergrenze des Anteils der Metallpartikel wird durch die Verarbeitbarkeit der mit den Metallpartikeln gefüllten Elektrodenmatrix in Kunststoffformtechnik gesetzt. Wenn die Metallpartikel etwa drei Viertel der Masse der Flächenelektrode ausmachen, finden beide Aspekte häufig ausreichend Berücksichtigung.

Die Elektrodenmatrix der Flächenelektrode kann stoffschlüssig an die Kunststoffmatrix der Sperrschicht angebunden sein. Dazu können die Elektrodenmatrix und die Kunststoffmatrix zumindest überwiegend identische Bestandteile aufweisen. Vorzugsweise ist die Bipolarplatte mit der mit den elektrisch leitfähigen Partikeln gefüllten Kunststoffmatrix und der mit den Metallpartikeln gefüllten Elektrodenmatrix in einem zusammenhängenden Kunststoffformverfahren ausgebildet, und die Elektrodenmatrix und die Kunststoffmatrix hängen als ein einziges Kunststoffformteil miteinander zusammen.

Die in die Kunststoffmatrix der Sperrschicht eingebetteten elektrisch leitfähigen Partikel können zumindest überwiegend mit den in die Elektrodenmatrix eingebetteten Metallpartikeln identisch sein. Dies kann für die Herstellung der erfindungsgemäßen Bipolarplatte in Kunststoffformtechnik vorteilhaft sein, weil nur ein einziges Material für die Sperrschicht und die Elektrodenmatrix verwendet werden muss. Aus Kostengründen, und auch, um die unterschiedlichen Anforderungen an die Gasdurchlässigkeit optimal zu erfüllen, kann es jedoch sinnvoll sein, andere elektrisch leitfähige Partikel für die Sperrschicht zu verwenden als die Metallpartikel der Flächenelektrode. Wenn in der Sperrschicht beispielsweise Kohlenstoffpartikel zum Einsatz kommen, kann dies auch Kostenvorteile gegenüber einer Sperrschicht haben, in die genau wie in die erste Flächenelektrode Metallpartikel aus Titan eingebettet sind. Dieser Kostenvorteil kann bei weniger kostspieligen Metallpartikeln aus einem Edelstahl zurückgehen oder ganz verschwinden, so dass bei Metallpartikeln aus Edelstahl diese vorteilhafterweise auch als elektrisch leitfähige Partikel in der Sperrschicht eingesetzt werden können.

Bei der erfindungsgemäßen Bipolarplatte können die in die Kunststoffmatrix der Sperrschicht eingebetteten elektrisch leitfähigen Partikel und/oder die in die erste Elektrodenmatrix eingebetteten Metallpartikel Teilchengrößen in einem Bereich von 10 µm bis 500 µm aufweisen. Als besonders vorteilhaft hat es sich erwiesen, wenn die Partikel in zwei unterschiedlichen dominierenden Partikelgrößen gleichzeitig eingesetzt werden, wobei sich die kleineren Partikel zwischen den größeren Partikeln anordnen. Hieraus ergeben sich Vorteile insbesondere hinsichtlich der Verarbeitbarkeit der mit einer großen Menge an Partikeln gefüllten Kunststoffmatrix bzw. Elektrodenmatrix. Konkret können die Partikel zum einen eine Partikelgröße zwischen 20 µm und 50 µm und zum anderen eine Partikelgröße zwischen 300 µm und 400 µm aufweisen.

Bei der erfindungsgemäßen Bipolarplatte kann der die erste Elektrodenmatrix umschließende Abdichtrand stoffschlüssig an die Kunststoffmatrix der Sperrschicht angebunden sein. Dazu können der Abdichtrand und die Kunststoffmatrix vorzugsweise zumindest überwiegend identische Bestandteile aufweisen. Auch hier gilt, dass die Sperrschicht und der Abdichtrand der erfindungsgemäßen Bipolarplatte vorzugsweise in einem geschlossenen Verfahren der Kunststoffformtechnik als einstückiger Kunststoffformkörper ausgebildet werden.

Um eine bei hoher elektrischer Leitfähigkeit besonders geringe Gasdurchlässigkeit der Sperrschicht zu erreichen, sollte die Kunststoffmatrix mindestens eine Dichte von 1,25 g/cm³ aufweisen. Vorzugsweise beträgt die Dichte der Kunststoffmatrix mindestens 1,5 g/cm³, und noch mehr bevorzugt mindestens 1,75 g/cm³. Als günstiger Kunststoff für die Kunststoffmatrix der Sperrschicht hat sich Polyvinylidenfluorid (PVDF) mit einer Dichte von ungefähr 1,77g/cm³ erwiesen. Alternativ kann die erfindungsgemäße Bipolarplatte auf der Basis von Duroplasten, wie beispielsweise Epoxidharzen und/oder Phenolharzen, ausgebildet werden. Trotz ihrer relativ geringen Dichte von etwa 1,3 g/cm³ ist auch mit Phenolharzen eine hohe Gasdichtigkeit der Sperrschicht mit den in die Kunststoffmatrix eingebetteten elektrisch leitfähigen Partikeln realisierbar.

Die Porosität der ersten Flächenelektrode der erfindungsgemäßen Bipolarplatte kann zum Beispiel durch eine dreidimensionale Strukturierung, insbesondere eine periodische dreidimensionale Strukturierung der Flächenelektrode erreicht sein. Konkret kann die erste Flächenelektrode als offenes räumliches Gitter ausgebildet sein. Alternativ oder zusätzlich kann die Flächenelektrode offenporig geschäumt sein. In die Sperrschicht der erfindungsgemäßen Bipolarplatte können zu der Flächenelektrode hin offene Querströmungskanäle eingeformt sein. Solche Querströmungskanäle können auch in die Flächenelektrode eingeformt sein und sind dann zu der Sperrschicht hin offen. Derartige Querströmungskanäle in der Flächenelektrode mag man auch als Teil der Porosität der Flächenelektrode ansehen.

In dem Abdichtrand der erfindungsgemäßen Bipolarplatte kann mindestens ein erster Versorgungskanal, typischerweise als normal zur Haupterstreckungsebene der Bipolarplatte verlaufendes Durchgangsloch, ausgebildet sein, der mit den Querströmungskanälen kommuniziert.

Neben klassischen Kunststoffformtechniken können bei der Herstellung der erfindungsgemäßen Bipolarplatte auch sogenannte additive Verfahren zum Einsatz kommen. So können die Sperrschicht, die erste Flächenelektrode und der Abdichtrand 3D-gedruckt sein.

Bei der erfindungsgemäßen Bipolarplatte kann in dem zentralen Bereich auf der zweiten Seite der Sperrschicht eine zweite Flächenelektrode angeordnet und von dem Abdichtrand umgeben sein. Diese zweite Flächenelektrode kann optional gleich wie die erste Flächenelektrode ausgebildet, d. h. spiegelbildlich zu der ersten Flächenelektrode sein.

Bei der erfindungsgemäßen Bipolarplatte kann auf mindestens einer der beiden Seiten der Sperrschicht eine zusätzliche Gasdiffusionsschicht innerhalb des Abdichtrands ausgebildet sein. Dann kann die Gasdiffusionsschicht aus demselben Material wie die Kunststoffmatrix oder die Elektrodenmatrix ausgebildet sein. Es ist auch möglich, eine separat hergestellte Gasdiffusionsschicht zu verwenden und beispielsweise durch Einbetten in den Abdichtrand randseitig zu fixieren.

Weiterhin kann bei der erfindungsgemäßen Bipolarplatte auf mindestens einer der beiden Seiten der Sperrschicht eine Protonenaustauschmembran (PEM) durch Einbetten in den Abdichtrand fixiert und gasdicht abgedichtet sein. Wenn die erfindungsgemäß Bipolarplatte die Protonenaustauschmembran auf einer Seite aufweist, können mehrere solcher Bipolarplatten zum direkten aufeinander Stapeln ausgebildet sein, um einen PEM-Stapelreaktor auszubilden.

Vorzugsweise ist die Dichtigkeit der erfindungsgemäßen Bipolarplatte zwischen einem an den Abdichtrand auf der ersten Seite der Sperrschicht anschließenden ersten Gasraum und einem auf der zweiten Seite der Sperrschicht anschließenden zweiten Gasraum geprüft, und die Bipolarplatte wird nur dann verwendet, wenn ihre Dichtigkeit bei der Prüfung einen vorgegebenen Grenzwert eingehalten hat. Das konkrete Ergebnis der Prüfung kann mit einem Prüfzeichen auf der Bipolarplatte angegeben werden, beispielsweise mit einem Zeichen, das nur dann angebracht wird, wenn die Prüfung bestanden wurde.

Bei einem erfindungsgemäßen PEM-Stapelreaktor sind mindestens zwei aufeinander gestapelte PEM-Brennstoffzellen oder PEM-Elektrolyseure durch eine erfindungsgemäße Bipolarplatte chemisch gegeneinander abgegrenzt und elektrisch miteinander in Reihe geschaltet. Zur Ausbildung dieses PEM-Stapelreaktors können mehrere erfindungsgemäße Bipolarplatten direkt aufeinander gestapelt und zwischen zwei Endplatten mechanisch gegeneinander verspannt sein.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer elektrischen Verbindung die Rede ist, ist dies so zu verstehen, dass genau eine elektrische Verbindung, zwei elektrische Verbindungen oder mehr elektrische Verbindungen vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Vertikalschnitt durch einen Teil einer ersten Ausführungsform einer erfindungsgemäßen Bipolarplatte, in dem alle unterschiedlichen Bestandteile der Bipolarplatte zu sehen sind.
- **Fig. 2**: zeigt einen Fig. 1 entsprechenden Vertikalschnitt durch einen Teil einer anderen Ausführungsform der erfindungsgemäßen Bipolarplatte.
- **Fig. 3**: ist ein Vertikalschnitt durch den Schichtaufbau im Zentralbereich einer weiteren Ausführungsform der erfindungsgemäßen Bipolarplatte.
- **Fig. 4**: zeigt einen erfindungsgemäßen PEM-Stapelreaktor in einer Seitenansicht; und
- **Fig. 5**: ist eine Auftragung von Zellspannung über Stromdichte bei einer mit erfindungsgemäßen Bipolarplatten aufgebauten Elektrolysezelle im Vergleich zu einer mit Flächenelektroden aus Titanstreckmetall ausgebildeten Elektrolysezelle.

### FIGURENBESCHREIBUNG

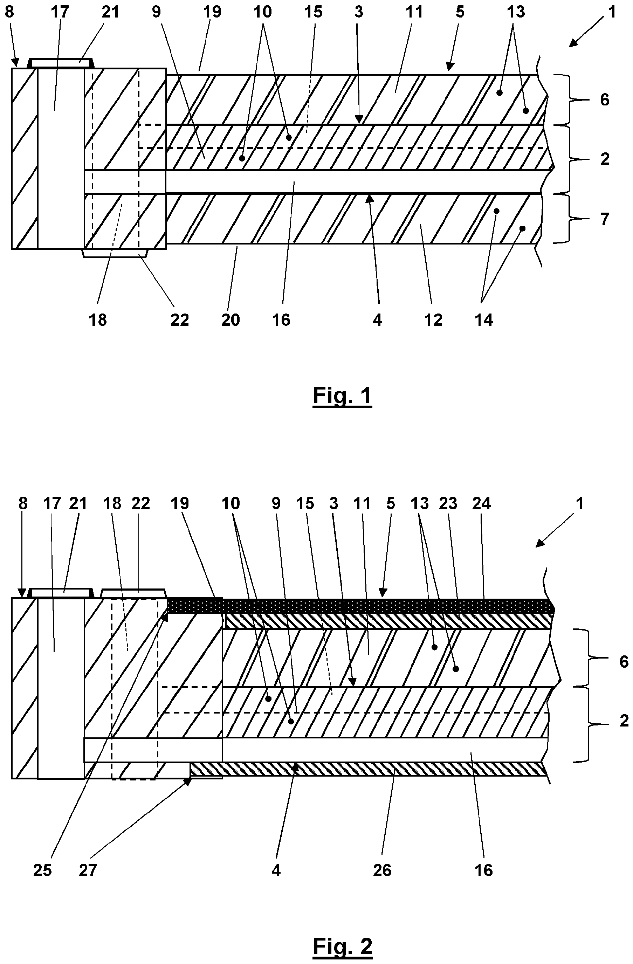

Die Darstellungen der Fig. 1 bis 4 sind nicht notwendigerweise maßstabsgerecht. D. h. insbesondere, dass den Figuren nicht unbedingt relative Längen- und Dickenverhältnisse entnommen werden können. Vielmehr können die tatsächlichen Längen- und Dickenverhältnisse bei erfindungsgemäßen Produkten ganz anders als dargestellt sein.

Die in **Fig. 1** dargestellte Bipolarplatte 1 weist einen gasundurchlässige Sperrschicht 2 auf. In einen zentralen Bereich 5 der Bipolarplatte 1 sind auf beiden Seiten 3 und 4 der Sperrschicht 2 Flächenelektroden 6 und 7 angeordnet. In einer Haupterstreckungsebene der Bipolarplatte 1 schließt ein Abdichtrand 8 stoffschlüssig und gasdicht an die Sperrschicht 2 an. Normal zu der Sperrschicht 2 erstreckt sich der Abdichtrand 8 bis über die Flächenelektroden 6 und 7 hinweg. So umschließt der in der Haupterstreckungsebene der Bipolarplatte 1 um den Zentralbereich 5 herum umlaufende Abdichtrand 8 die auf der Sperrschicht 3 angeordneten Flächenelektroden 6 und 7. Der Abdichtrand 8 weist eine gleiche Zusammensetzung wie eine Kunststoffmatrix 9 der Sperrschicht 2 auf. Die Kunststoffmatrix 9 der Sperrschicht 2 ist jedoch mit elektrisch leitfähigen Partikeln 10 gefüllt, von denen hier nur zwei exemplarisch dargestellt sind. Dadurch ist eine elektrische Verbindung, d. h. eine elektrische Leitfähigkeit, zwischen den Seiten 3 und 4 der Sperrschicht 2 und den darauf angeordneten Flächenelektroden 6 und 7 gegeben. Der Abdichtrand 8 weist keine elektrisch leitfähigen Partikel auf, die eine elektrische Leitfähigkeit begründen würden. Vielmehr isoliert der Abdichtrand 8 elektrisch. Elektrodenmatrizen 11 und 12 der Flächenelektroden 6 und 7 sind mit Metallpartikeln 13 und 14 gefüllt, von denen jeweils wieder nur zwei exemplarisch dargestellt sind. Die Metallpartikel 13 und 14 verleihen den Flächenelektroden 6 und 7 elektrische Leitfähigkeit. Die Metallpartikel 13 und 14 sind teilweise vollständig von der jeweiligen Elektrodenmatrix 11 oder 12 eingeschlossen. Teilweise liegen sie an inneren oder äußeren Oberflächen der Flächenelektroden 11 und 12 frei. Innere Oberflächen der Flächenelektroden 11 und 12 sind deshalb vorhanden, weil die Flächenelektroden 11 und 12 offen porös sind, d. h. Netzwerke von Poren aufweisen, die eine Gasdurchlässigkeit der Flächenelektroden 11 und 12 zur Folge haben. Die hier nicht zeichnerische hervorgehobenen Netzwerke der Poren der Flächenelektroden 11 und 12 schließen an Querströmungskanäle 15 und 16 an, die an den Seiten 3 und 4 in die Sperrschicht 2 eingeformt sind. Dabei verläuft nur der in Fig. 1 dargestellte Querströmungskanal 16 in der Zeichenebene von Fig. 1. Der in Fig. 1 mit gestrichelter Linie eingezeichnete Querströmungskanal 15 verläuft hinter der Zeichenebene von Fig. 1. Der Querströmungskanal 16 ist an einen Versorgungskanal 17 angeschlossen, der normal zu der Haupterstreckungsebene der Bipolarplatte 1 durch den Abdichtrand 8 verläuft. Der Querströmungskanal 15 ist entsprechend an einem Versorgungskanal 18 angeschlossen, der ebenfalls normal zu der Haupterstreckungsebene der Platte 1 durch den Abdichtrand 8 verläuft, dort aber gegenüber dem Versorgungskanal 17 abgedichtet ist. An ihren den Versorgungskanälen 17 und 18 gegenüberliegenden Enden können die Querströmungskanäle 15 und 16 an weitere Versorgungskanäle in dem Abdichtrand angeschlossen sein. Dabei können die Versorgungskanäle 17 und 18 einer Fluidzufuhr zu den Querströmungskanälen 15 und 16 dienen, während die weiteren Versorgungskanäle einer Fluidabfuhr aus den Querströmungskanälen 15 und 16 dienen.

Die Elektrodenmatrizen 11 und 12 der Flächenelektroden 6 und 7 können ebenfalls auf demselben Material basieren, wie die Kunststoffmatrix 9 der Sperrschicht 2. Zudem können die Metallpartikel 13 und 14 mit den elektrisch leitfähigen Partikeln 10 identisch sein. In jedem Fall ist aber die Struktur der Flächenelektroden 6 und 7 offenporig, während die Struktur der Querschicht 2 trotz der Querströmungskanäle 15 und 16 grundsätzlich soweit massiv ist, dass eine Gasundurchlässigkeit erreicht wird. Die Porosität der Flächenelektroden 6 und 7 kann beispielsweise dadurch realisiert sein, dass den Elektrodenmatrizen 11 und 12 anders als der Kunststoffmatrix 9 der Sperrschicht 2 ein Treibmittel zugesetzt wurde. Innerhalb des Abdichtrahmens 8 sind auf den Flächenelektroden 6 und 7 Freiräume 19 und 20 belassen, in die Gasdiffusionsschichten eingelegt werden können. Dann können mehrere Bipolarplatten 1 unter Zwischenordnung von Protonenaustauschmembranen mit angespritzten eigenen Abdichträndern gestapelt werden, um einen PEM-Reaktor aufzubauen. Dabei dienen an den Abdichtrand 8 angeformte Dichtungen 21 und 22 zur Abdichtung der Versorgungskanäle 17 und 18 über die Abdichtränder 8 der aufeinander gestapelten Bipolarplatten 1 hinweg.

Die Ausführungsform der Bipolarplatte 1, die in **Fig. 2** dargestellt ist, weist insbesondere die folgenden Unterschiede zu der Ausführungsform gemäß Fig. 1 auf. Nur auf der einen Seite 3 der Sperrschicht 2 ist eine poröse Flächenelektrode 6 angeordnet. Hieran schließt von der Sperrschicht 2 weg eine Gasdiffusionsschicht 23 an. Darüber befindet sich eine Protonenaustauschmembran 24. Die Protonenaustauschmembran 24 ist mit ihrem äußeren Rand 25 gasdicht in den Abdichtrand 8 eingebettet. Die Anordnung der Gasdiffusionsschicht 23 ist dadurch fixiert, dass sie in dem Freiraum 19 zwischen der Flächenelektrode 6 und der Protonenaustauschmembran 24 liegt. Direkt auf der anderen Seite 14 der Sperrschicht 2 ist eine weitere Gasdiffusionsschicht 26 angeordnet, die durch Einbetten ihres Rands 27 in den Abdichtrand 8 festgelegt ist. Mehrere Exemplare der Bipolarplatte 1 gemäß Fig. 2 können unmittelbar aufeinander gestapelt werden, um einen PEM-Reaktor auszubilden, da sie alle Bestandteile der Zellen eines PEM-Stapelreaktors umfassen. An den Enden des Stapelreaktors können Bipolarplatten 1 angeordnet sein, die mit der Seite 3 bzw. der Seite 4 der Sperrschicht 2 enden, wobei in dieser Seite 3 bzw. 4 dann keine Querströmungskanäle 15 bzw. 16 mehr ausgebildet sind.

Es versteht sich, dass auch bei Ausbildung eines Stapelreaktors mit Bipolarplatten gemäß Fig. 1 der Aufbau des Stapelreaktors mit Sperrschichten 2 endet, auf deren äußeren Seiten 3 bzw. 4 keine Querströmungskanäle 15 bzw. 16 mehr ausgebildet sind.

Die Bipolarplatte 1 gemäß Fig. 1 kann vollständig durch additive Verfahren, d. h. sukzessives Hinzufügen von gefüllter Kunststoffmatrix 9, gefüllter Elektrodenmatrix 11 oder 12 oder ungefüllter Kunststoffmatrix für den Abdichtrand 8 ausgebildet werden. Bei der Bipolarplatte 1 gemäß Fig. 2 wird typischerweise eine separat gefertigte Protonenaustauschmembran 24 in den Aufbau integriert. Auch die Gasdiffusionsschichten 24 und 26 können zuvor separat gefertigte Elemente sein.

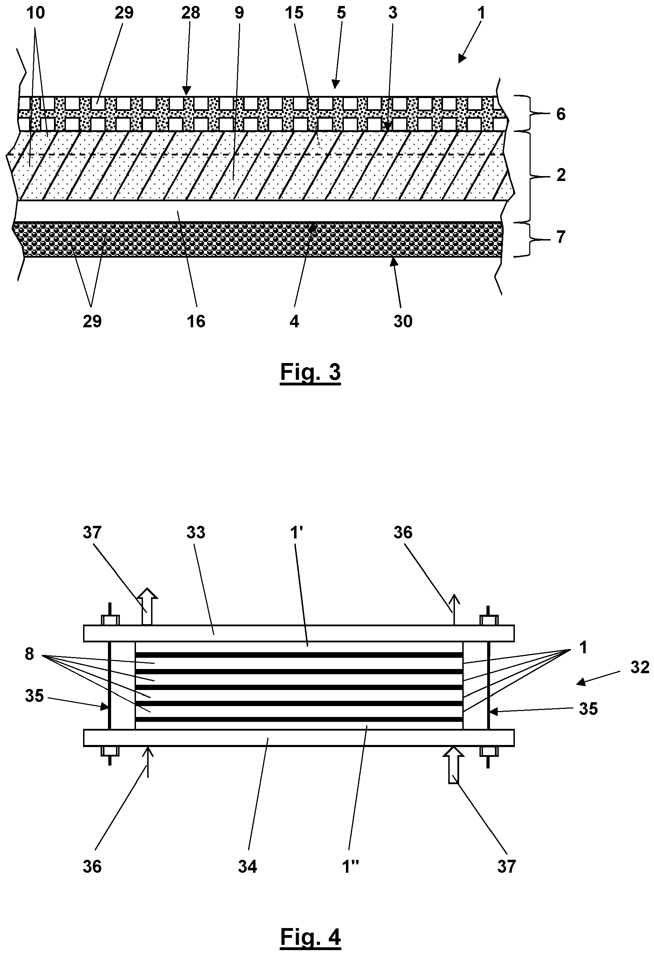

Fig. 3 zeigt einen Schichtaufbau im zentralen Bereich 5 einer Bipolarplatte 1 mit der Sperrschicht 2, in deren Seiten 3 und 4 die Querströmungskanäle 15 und 16 ausgebildet sind, und den auf beiden Seiten 3 und 4 der Sperrschicht 2 angeordneten Flächenelektroden 6 und 7. Dabei ist die Flächenelektrode 6 dreidimensional periodisch strukturiert und konkreter als offenes dreidimensionales Gitter 28 mit einem Netzwerk aus untereinander verbundenen Poren 29, die auch als Hohlräume bezeichnet werden können, ausgebildet. Demgegenüber ist die Flächenelektrode 7, um eine alternative Ausführungsform von Flächenelektroden 6, 7 zu zeigen, als offenporiger Schaum 30 und so mit einem unregelmäßigen Netzwerk aus untereinander verbundenen Poren 29 ausgebildet. Die Netzwerke der offenen Poren 29 kommunizieren jeweils mit den Querströmungskanälen 15 bzw. 16 in den Seiten 3 und 4 der Sperrschicht 2.

In **Fig. 4** ist ein PEM-Stapelreaktor 32 dargestellt, der mehrere Bipolarplatten 1 gemäß Fig. 2 und zwei jeweils nur einen Teil des Schichtaufbaus der Bipolarplatten 1 gemäß Fig. 2 aufweisende Halbplatten 1' bzw. 1" zwischen zwei Endplatten 33 und 34 umfasst. Die Endplatten 33 und 34 sind durch Zugelemente 35 gegeneinander verspannt. So wird der Stapel aus den Bipolarplatten 1, 1', 1" zusammengedrückt und seitlich durch kraftschlüssige Anlage der Abdichtränder 8 der Bipolarplatten 1, 1', 1" abgedichtet. Reaktionsfluide 36 und 37 werden über die Versorgungskanäle in den Abdichträndern 8 im Gegenstrom durch den Stapelreaktor geführt. Ein elektrischer Anschluss des PEM-Stapelreaktors 32 kann über die Endplatten 33 und 34 erfolgen, wenn diese elektrische leitfähig ausgebildet sind, aber durch die Zugelemente 35 nicht elektrisch miteinander verbunden sind.

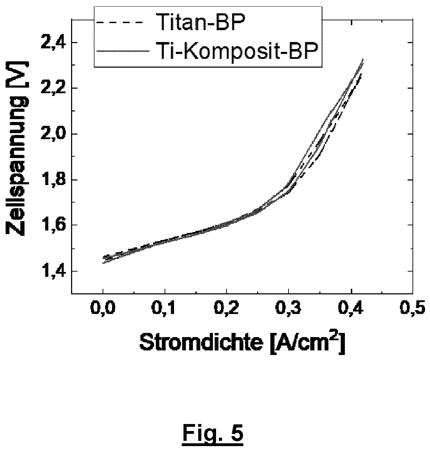

Der in **Fig. 5** mit durchgezogener Linie aufgetragene Verlauf der Zellspannung über der zunächst ansteigenden und dann wieder abfallenden Stromdichte wurde an einer Elektrolysezelle, d. h. einer Elementarzelle eines Elektrolyseurs gemessen, die mit Hilfe von erfindungsgemäßen Bipolarplatten 1 aufgebaut worden war. Die Metallpartikel 13, 14 in den Elektrodenmatrizen 11, 12 der porösen Flächenelektroden 6, 7 auf beiden Seiten der PEM 24 waren Titanpartikel. Im Vergleich dazu ist mit gestrichelter Linie der entsprechende Verlauf der Zellspannung über der Stromdichte für eine Elektrolysezelle mit herkömmlichen Flächenelektroden aus Titanstreckmetall aufgetragen. Bei Stromdichten bis etwa 0,25 A/cm² zeigen sich keine signifikanten Unterschiede.

Bei höheren Stromdichten ist die Zellspannung bei der Elektrolysezelle mit den erfindungsgemäßen Bipolarplatten 1 etwas höher. Der Unterschied liegt in einer Größenordnung von 1 % der Zellspannung. Dieser Unterschied ist auf den unbestreitbaren Unterschied in der elektrischen Leitfähigkeit der Flächenelektroden 6, 7 mit den Elektrodenmatrizen 11, 12 aus Kunststoff gegenüber Flächenelektroden nur aus elektrisch leitfähigem Metall zurückzuführen, bleibt aber klein. Dagegen stehen die Vorteile bei der Verarbeitung der Elektrodenmatrizen mit den Metallpartikeln 13, 14 und die sich damit eröffnenden Möglichkeiten in Bezug auf eine verbesserte Funktionalität der Flächenelektroden.

### BEZUGSZEICHENLISTE

- 1: Bipolarplatte
- 2: Sperrschicht
- 3: Seite
- 4: Seite
- 5: Zentraler Bereich
- 6: Flächenelektrode
- 7: Flächenelektrode
- 8: Abdichtrand
- 9: Kunststoffmatrix
- 10: Elektrisch leitfähiger Partikel
- 11: Elektrodenmatrix
- 12: Elektrodenmatrix
- 13: Metallpartikel
- 14: Metallpartikel
- 15: Querströmungskanal
- 16: Querströmungskanal
- 17: Versorgungskanal
- 18: Versorgungskanal
- 19: Freiraum
- 20: Freiraum
- 21: Dichtung
- 22: Dichtung
- 23: Gasdiffusionsschicht
- 24: Protonenaustauschmembran (PEM)
- 25: Randbereich der PEM 24
- 26: Gasdiffusionsschicht
- 27: Randbereich der Gasdiffusionsschicht 26
- 28: räumliches Gitter
- 29: Pore
- 30: Schaum
- 32: PEM-Stapelreaktor
- 33: Endplatte
- 34: Endplatte
- 35: Zugelement
- 36: Reaktionsfluid
- 37: Reaktionsfluid
- 1': Halbplatte
- 1": Halbplatte

## Patentansprüche

1. Bipolarplatte (1) zur chemischen Abgrenzung und elektrischen Reihenschaltung aufeinander gestapelter PEM-Brennstoffzellen oder PEM-Elektrolyseure mit
- einer gasundurchlässigen Sperrschicht (2), wobei die Sperrschicht (2) eine Kunststoffmatrix (9) aufweist,
- einer ersten Flächenelektrode (6) in einem zentralen Bereich (5) auf einer ersten Seite (3) der Sperrschicht (2), wobei die erste Flächenelektrode (6) offen porös ist und von einem Abdichtrand (8) der Bipolarplatte (1) umgeben ist, und
- einer elektrischen Verbindung zwischen der ersten Flächenelektrode (6) auf der ersten Seite (3) und einer gegenüberliegenden zweiten Seite (4) der Sperrschicht (2), wobei die elektrische Verbindung in die Kunststoffmatrix (9) der Sperrschicht (2) eingebettete elektrisch leitfähige Partikel (10) aufweist,
**dadurch gekennzeichnet, dass** die erste Flächenelektrode (6) eine erste Elektrodenmatrix aus Kunststoff aufweist, wobei eine elektrische Leitfähigkeit der ersten Flächenelektrode (6) auf in die erste Elektrodenmatrix (11) eingebetteten Metallpartikeln (13) basiert.

2. Bipolarplatte (1) nach Anspruch 1, **dadurch gekennzeichnet, dass** die Metallpartikel (13) überwiegend aus Titan und/oder Edelstahl bestehen, wobei die Metallpartikel (13) optional mit Platin und/oder Ruthenium und/oder einem Titanmischoxid und/oder einem Titannitrid beschichtet sind.

3. Bipolarplatte (1) nach Anspruch 2, **dadurch gekennzeichnet, dass** die Metallpartikel (13) 65 % bis 85 %, vorzugsweise 70 % bis 80 % einer Masse der ersten Flächenelektrode (6) ausmachen.

4. Bipolarplatte (1) nach einem der vorhergehenden Ansprüche, **dadurch gekennzeichnet, dass** die erste Elektrodenmatrix (11) der ersten Flächenelektrode (6) stoffschlüssig an die Kunststoffmatrix (9) der Sperrschicht (2) angebunden ist, wobei die erste Elektrodenmatrix (11) und die Kunststoffmatrix (9) vorzugsweise zumindest überwiegend identische Bestandteile aufweisen.

5. Bipolarplatte (1) nach einem der vorhergehenden Ansprüche, **dadurch gekennzeichnet, dass** die in die Kunststoffmatrix (9) der Sperrschicht (2) eingebetteten elektrisch leitfähigen Partikel (10) zumindest überwiegend mit den in die erste Elektrodenmatrix (11) eingebetteten Metallpartikeln (13) identisch sind.

6. Bipolarplatte (1) nach einem der vorhergehenden Ansprüche, **dadurch gekennzeichnet, dass** die in die Kunststoffmatrix (9) der Sperrschicht (2) eingebetteten elektrisch leitfähigen Partikel (10) und/oder die in die erste Elektrodenmatrix (11) eingebetteten Metallpartikel (13) Partikelgrößen im Bereich von 10 bis 500µm aufweisen, wobei die Partikel (10, 13) jeweils optional in zwei dominierenden Partikelgrößen zwischen 20 und 50 µm und zwischen 300 und 400 µm vorhanden sind.

7. Bipolarplatte (1) nach einem der vorhergehenden Ansprüche, **dadurch gekennzeichnet, dass** der die erste Flächenelektrode (6) umschließende Abdichtrand (8) stoffschlüssig an die Kunststoffmatrix (9) der Sperrschicht (2) angebunden ist, wobei der Abdichtrand (8) und die Kunststoffmatrix (9) vorzugsweise zumindest überwiegend identische Bestandteile aufweisen.

8. Bipolarplatte (1) nach einem der vorhergehenden Ansprüche, **dadurch gekennzeichnet,**
- **dass** die Kunststoffmatrix (9) eine Dichte von mindestens 1,25 g/cm³, vorzugsweise von mindestens 1,5 g/cm³ und mehr bevorzugt von mindestens 1,75 g/cm³ aufweist und/oder
- **dass** die Kunststoffmatrix (9) auf einem PVDF, einem Epoxidharz oder einem Phenolharz basiert.

9. Bipolarplatte (1) nach einem der vorhergehenden Ansprüche, **dadurch gekennzeichnet, dass** die erste Flächenelektrode (6) dreidimensional periodisch strukturiert und optional als räumliches Gitter (28) ausgebildet ist und/oder offenporig geschäumt ist.

10. Bipolarplatte (1) nach einem der vorhergehenden Ansprüche, **dadurch gekennzeichnet, dass** vorzugsweise in die Sperrschicht (2) zu der ersten Flächenelektrode (6) hin offene Querströmungskanäle (15, 16) und/oder in die erste Flächenelektrode (6) zu der Sperrschicht (2) hin offene Querströmungskanäle eingeformt sind, wobei in dem Abdichtrand (8) mindestens ein erster Versorgungskanal (17, 18) ausgebildet ist, der mit den Querströmungskanälen (15, 16) kommuniziert.

11. Bipolarplatte (1) nach einem der vorhergehenden Ansprüche, **dadurch gekennzeichnet, dass** die Sperrschicht (2), die erste Flächenelektrode (6) und der Abdichtrand (8) additiv gefertigt und optional 3D-gedruckt sind.

12. Bipolarplatte (1) nach einem der vorhergehenden Ansprüche, **dadurch gekennzeichnet, dass** eine zweite Flächenelektrode (7) in dem zentralen Bereich (5) auf der zweiten Seite (4) der Sperrschicht (2) angeordnet ist und von dem Abdichtrand (8) umgeben ist, wobei die zweite Flächenelektrode (7) optional gleich wie die erste Flächenelektrode (6) ausgebildet ist.

13. Bipolarplatte (1) nach einem der vorhergehenden Ansprüche, **dadurch gekennzeichnet,**
- **dass** auf mindestens einer der beiden Seiten (3, 5) der Sperrschicht (2) eine zusätzliche Gasdiffusionsschicht (23) - vorzugsweise aus demselben Material wie die Kunststoffmatrix (9) oder die Elektrodenmatrix (11) - innerhalb des Abdichtrands (8) ausgebildet oder durch Einbetten in den Abdichtrand (8) fixiert ist und/oder
- **dass** auf mindestens einer der beiden Seiten (3, 4) der Sperrschicht (2) eine Protonenaustauschmembran (24) durch Einbetten in den Abdichtrand (8) fixiert und abgedichtet ist.

14. Bipolarplatte (1) nach einem der vorhergehenden Ansprüche, **dadurch gekennzeichnet, dass** die Dichtigkeit der Bipolarplatte (1) zwischen einem an den Abdichtrand (8) auf der ersten Seite (3) der Sperrschicht (2) anschließenden ersten Gasraum und einem auf der zweiten Seite (4) der Sperrschicht (2) anschließenden zweiten Gasraum geprüft ist und das Ergebnis der Prüfung optional mit einem Prüfzeichen auf der Bipolarplatte (1) angegeben ist.

15. PEM-Stapelreaktor (32) mit mindestens zwei aufeinander gestapelten PEM-Brennstoffzellen oder PEM-Elektrolyseuren, die durch eine Bipolarplatte (1) nach einem der vorhergehenden Ansprüche chemisch gegeneinander abgegrenzt und elektrisch miteinander in Reihe geschaltet sind.
